# EUROPÄISCHE PATENTSCHRIFT

(11) **EP 4 030 574 B1**
(45) Veröffentlichungstag und Bekanntmachung des Hinweises auf die Patenterteilung: **23.07.2025**
(21) Anmeldenummer: 21213009.0
(22) Anmeldetag: 08.12.2021
(51) Int. Cl.: H02J 1/08, F02N 11/08

(54) **STARTERSYSTEM FÜR EINE BRENNKRAFTMASCHINE IN EINEM FAHRZEUG**
STARTER SYSTEM FOR AN INTERNAL COMBUSTION ENGINE IN A VEHICLE
SYSTÈME DE DÉMARREUR POUR UN MOTEUR À COMBUSTION INTERNE DANS UN VÉHICULE

(30) Priorität: 14.01.2021 DE 102021100609
(43) Veröffentlichungstag der Anmeldung: 20.07.2022
(73) Patentinhaber: Eberspächer Controls Landau GmbH & Co. KG, 76829 Landau (DE)
(72) Erfinder: Wandres, Steffen, Kandel (DE); Weimann, Mark-Arno, Mackenbach (DE)
(74) Vertreter: Ruttensperger Lachnit Trossin Gomoll

(56) Entgegenhaltungen:
- DE-A1- 102012 222 061
- GB-A- 2 373 648
- US-A1- 2014 306 521

## Beschreibung

Die vorliegende Erfindung betrifft ein Startersystem für eine Brennkraftmaschine in einem Fahrzeug.

In Fahrzeugen vorgesehene Brennkraftmaschinen werden im Allgemeinen durch elektromotorisch arbeitende Starter gestartet. Dabei wird im Startzustand, also zum Anlassen einer Brennkraftmaschine, eine von einer Spannungsquelle, zum Beispiel einer Blei-Batterie oder einer Lithium-Ionen-Batterie, bereitgestellte Versorgungsspannung von beispielsweise 12 V über einen im Startbetriebszustand zu schließenden bzw. geschlossen zu haltenden Starterschalter an einen ersten Starteranschluss des Starters angelegt. Ein zweiter Starteranschluss des Starters kann an das Massepotenzial des Fahrzeugs angeschlossen sein, so dass durch die am Starter anliegende elektrische Spannung bzw. den durch die Starterwicklung fließenden elektrischen Strom im Starter ein die Brennkraftmaschine hochdrehendes Drehmoment erzeugt wird. Da am Beginn des Startvorgangs der Starter in Ruhe ist, fließt aufgrund in diesem Zustand im Wesentlichen noch nicht vorhandener Gegeninduktion und aufgrund des vergleichsweise geringen ohmschen Widerstandes der Starterwicklung ein sehr hoher elektrischer Strom beispielsweise von bis zu 1000 A durch die Starterwicklung des Starters. Dies führt aufgrund des in diesem Zustand im Wesentlichen vollständig in der Spannungsquelle auftretenden Spannungsabfalls zu einer sehr hohen Belastung der Spannungsquelle und kann insbesondere auch zu einer magnetischen Übersättigung des Starters führen, mit der weiteren Folge der Gefahr eines Spannungseinbruchs im Bordspannungssystem und eines vergleichsweise geringen Wirkungsgrades im Startbetriebszustand.

Ein Startersystem für eine Brennkraftmaschine in einem Fahrzeug gemäß dem Oberbegriff des Anspruchs 1 ist aus der DE 10 2012 222 061 A1 bekannt.

Es ist die Aufgabe der vorliegenden Erfindung, ein Startersystem für eine Brennkraftmaschine in einem Fahrzeug vorzusehen, mit welchem ein effizienter Startbetrieb bei geringer Belastung einer eine Versorgungsspannung für den Starter bereitstellenden Spannungsquelle erreicht wird.

Erfindungsgemäß wird diese Aufgabe gelöst durch ein Startersystem für eine Brennkraftmaschine in einem Fahrzeug gemäß Anspruch 1, umfassend:
- einen Starter,
- eine Spannungsquelle zum Versorgen des Starters mit elektrischer Energie in einem Startbetriebszustand,
- einen Abwärtswandler zum Bereitstellen einer Startbetriebsspannung für den Starter im Startbetriebszustand durch Abwärtswandeln einer durch die Spannungsquelle bereitgestellten Versorgungsspannung.

Durch das Einsetzen eines allgemein auch als Buck-Converter bezeichneten Abwärtswandlers kann im Wesentlichen ohne Energieverluste für den Starter eine im Vergleich zur Versorgungsspannung der Spannungsquelle verringerte Startbetriebsspannung bereitgestellt werden, welche insbesondere auch in einer Anfangsphase des Startbetriebs das Auftreten eines übermäßig hohen elektrischen Stroms und somit eine übermäßige Belastung der Spannungsquelle ebenso wie die Gefahr eines Spannungseinbruchs in einem Bordspannungssystem vermeidet. Aufgrund der geringeren Belastung der Spannungsquelle besteht damit die Möglichkeit, eine kleiner dimensionierte Spannungsquelle einzusetzen, ohne diese und auch den Starter einer übermäßigen Belastung auszusetzen. Aufgrund der erhöhten Betriebssicherheit, insbesondere der erhöhten Spannungs-Sicherheit für ein Bordspannungssystem, besteht somit eine ASIL-Fähigkeit, so dass ein erfindungsgemäß aufgebautes Startersystem insbesondere auch für den Einsatz in Hybridfahrzeugen geeignet ist.

Der Abwärtswandler umfasst eine Wandlerinduktivität sowie eine erste Schaltereinheit, wobei ein erster Schalteranschluss der ersten Schaltereinheit mit der Spannungsquelle zu verbinden ist und ein zweiter Schalteranschluss der ersten Schaltereinheit mit einem ersten Starteranschluss des Starters verbunden ist, wobei gemäß einem besonders vorteilhaften Aspekt zum Erhalt einer besonders einfachen Struktur des Abwärtswandlers die Wandlerinduktivität eine Starterwicklung des Starters umfasst.

Der Abwärtswandler kann ferner eine zweite Schaltereinheit umfassen, wobei ein erster Schalteranschluss der zweiten Schaltereinheit mit dem zweiten Schalteranschluss der ersten Schaltereinheit und dem ersten Starteranschluss des Starters verbunden ist und ein zweiter Schalteranschluss der zweiten Schaltereinheit mit einem zweiten Starteranschluss des Starters verbunden ist. Somit ergibt sich eine Schaltung, bei welcher die erste Schaltereinheit und der Starter zueinander seriell geschaltet sind und die zweite Schaltereinheit seriell zur ersten Schaltereinheit und parallel zum Starter bzw. der durch die Starterwicklung bereitgestellten Wandlerinduktivität geschaltet ist.

Zur Versorgung des Starters im Startbetriebszustand mit elektrischer Energie kann vorgesehen sein, dass der erste Schalteranschluss der ersten Schaltereinheit mit einem Pluspol der Spannungsquelle zu verbinden ist, und dass der zweite Schalteranschluss der zweiten Schaltereinheit und der zweite Starteranschluss des Starters mit einem Massepotenzial verbunden sind.

Unter Berücksichtigung der im Startbetriebszustand fließenden vergleichsweise hohen elektrischen Ströme von bis zu einigen 100 A wird vorgeschlagen, dass die erste Schaltereinheit wenigstens einen ersten MOSFET-Schalter umfasst, wobei ein Drain-Anschluss des wenigstens einen ersten MOSFET-Schalters den ersten Schalteranschluss der ersten Schaltereinheit bereitstellt und ein Source-Anschluss des wenigstens einen ersten MOSFET-Schalters den zweiten Schalteranschluss der ersten Schaltereinheit bereitstellt, oder/und dass die zweite Schaltereinheit wenigstens einen zweiten MOSFET-Schalter umfasst, wobei ein Drain-Anschluss des wenigstens einen zweiten MOSFET-Schalters den ersten Schalteranschluss der zweiten Schaltereinheit bereitstellt und ein Source-Anschluss des wenigstens einen zweiten MOSFET-Schalters den zweiten Schalteranschluss der zweiten Schaltereinheit bereitstellt.

Um durch aufeinander abgestimmtes Öffnen und Schließen der Schaltereinheiten eine bezüglich der Versorgungsspannung der Spannungsquelle gesenkte Startbetriebsspannung bereitstellen zu können, ohne dabei einen elektrischen Kurzschluss über die Schaltereinheiten zu erzeugen, wird vorgeschlagen, dass eine Ansteuereinheit vorgesehen ist zum wahlweisen Öffnen und Schließen der ersten Schaltereinheit und der zweiten Schaltereinheit im Startbetriebszustand derart, dass im Wesentlichen nur dann, wenn die erste Schaltereinheit geöffnet ist, die zweite Schaltereinheit geschlossen ist, und im Wesentlichen nur dann, wenn die zweite Schaltereinheit geöffnet ist, die erste Schaltereinheit geschlossen ist.

Zum Verbinden der ersten Schaltereinheit mit der Spannungsquelle im Startbetriebszustand ist der erste Schalteranschluss der ersten Schaltereinheit über einen Starterschalter mit der Spannungsquelle zu verbinden, wobei ein erster Schalteranschluss des Starterschalters mit der Spannungsquelle verbunden ist und ein zweiter Schalteranschluss des Starterschalters mit dem ersten Schalteranschluss der ersten Schaltereinheit verbunden ist.

Um am Beginn eines Startvorgangs, also bei zunächst noch geöffnetem Starterschalter, einen Stromfluss zu ermöglichen, der aufgrund der dadurch erzeugten elektromagnetischen Kraft zum Schließen des Starterschalters führt, ist eine Kondensatoreinheit vorgesehen, wobei ein erster Kondensatoranschluss der Kondensatoreinheit mit dem ersten Schalteranschluss der ersten Schaltereinheit und dem zweiten Schalteranschluss des Starterschalters verbunden ist und ein zweiter Kondensatoranschluss der Kondensatoreinheit mit einem zweiten Starteranschluss des Starters oder/und einem Massepotenzial verbunden ist. Das Vorsehen einer derartigen Kondensatoreinheit erhöht ferner die elektromotorische Verträglichkeit (EMV) in dem erfindungsgemäß aufgebauten Startersystem.

Dem Starterschalter ist ein Einrückrelais zugeordnet. Ein Steuerschalter ist dazu ausgebildet, bei Erzeugung eines Startbefehls eine an einem Pluspol der Spannungsquelle bereitgestellte Versorgungsspannung zum Erzeugen einer elektromagnetischen Kraft zum Schließen des Starterschalters an das Einrückrelais anzulegen, so dass ein zum Schließen des Starterschalters erforderlicher, durch eine Wicklung des Einrückrelais fließender elektrischer Strom die Kondensatoreinheit lädt.

Die Erfindung betrifft ferner ein Verfahren zum Betreiben eines erfindungsgemäß aufgebauten Startersystems zum Starten einer Brennkraftmaschine, wobei nach Erzeugen eines Startbefehls der Abwärtswandler derart betrieben wird, dass eine an den Starter angelegte Startbetriebsspannung kleiner ist als eine durch die Spannungsquelle bereitgestellte Versorgungsspannung oder/und dass ein durch eine Starterwicklung des Starters fließender Starterstrom eine vorbestimmte Startstromschwelle nicht übersteigt.

Die vorliegende Erfindung wird nachfolgend mit Bezug auf die beiliegenden Figuren detailliert beschrieben, welche ein vereinfachtes Schaltbild eines Startersystems zum Starten einer Brennkraftmaschine eines Fahrzeugs darstellt.

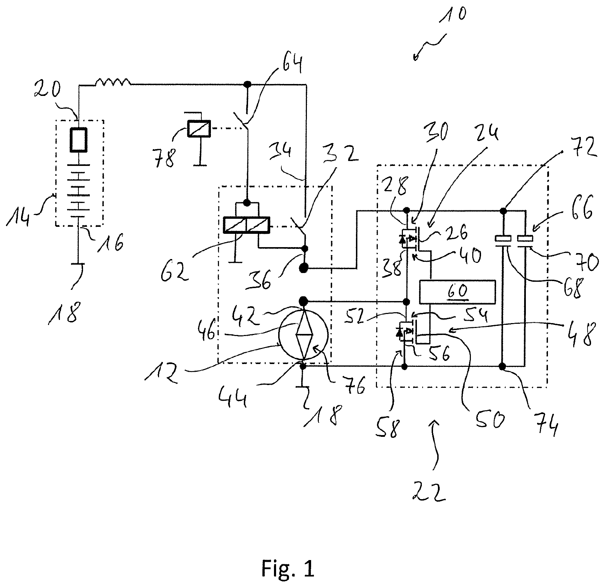

In Fig. 1 ist ein Startersystem für eine Brennkraftmaschine in einem Fahrzeug allgemein mit 10 bezeichnet. Das Startersystem 10 umfasst einen elektromotorisch arbeitenden Starter 12, der im Startbetriebszustand ein Drehmoment generiert, durch welches eine mit der Startersystem 10 zu startende bzw. anzulassende Brennkraftmaschine hochgedreht wird.

Das Startersystem 10 umfasst ferner eine beispielsweise als Blei-Batterie oder als Lithium-Ionen-Batterie ausgebildete Spannungsquelle 14, welche als Gleichspannungsquelle ausgebildet ist mit einem Minuspol 16 an ein Massepotential 18 eines Fahrzeugs angeschlossen sein kann und an einem Pluspol 20 eine Versorgungsspannung von beispielsweise 12 V bereitstellt.

Beruhend auf der durch die Spannungsquelle 14 bereitgestellten Versorgungsspannung wird in einem Startbetriebszustand eine Startspannung an dem Starter 12 angelegt, deren Spannungsniveau unter der durch die Spannungsquelle 14 bereitgestellten Versorgungsspannung liegt. Dazu nutzt das Startersystem 10 einen allgemein auch als Buck-Converter bezeichneten Abwärtswandler 22. Der Abwärtswandler 22 umfasst eine erste Schaltereinheit 24, welche im dargestellten Ausgestaltungsbeispiel mit einem ersten MOSFET-Schalter 26 aufgebaut ist. Ein Drain-Anschluss 28 des ersten MOSFET-Schalters 26 stellt einen ersten Schalteranschluss 30 der ersten Schaltereinheit 24 bereit und ist über einen als Relaisschalter ausgebildeten Starterschalter 32 mit der Spannungsquelle 14 zu verbinden. Der Starterschalter 32 weist eine mit dem Pluspol 20 der Spannungsquelle 14 verbundenen ersten Schalteranschluss 34 und einen mit dem ersten Schalteranschluss 30 der ersten Schaltereinheit 24 verbundenen zweiten Schalteranschluss 36 auf.

Ein Source-Anschluss 38 des ersten MOSFET-Schalters 26 der ersten Schaltereinheit 24 stellt einen zweiten Schalteranschluss 40 der ersten Schaltereinheit 24 bereit und ist mit einem ersten Starteranschluss 42 des Starters 12 verbunden. Ein zweiter Starteranschluss 44 des Starters 12 ist mit dem Massepotential 18 des Fahrzeugs verbunden. Im Startbetriebszustand fließt ein elektrischer Strom zwischen dem ersten Starteranschluss 42 und dem zweiten Starteranschluss 44 über eine Starterwicklung 46.

Der Abwärtswandler 22 umfasst ferner eine zweite Schaltereinheit 48. Auch die zweite Schaltereinheit 48 ist mit einem MOSFET-Schalter 50 ausgebildet. Ein Drain-Anschluss 52 des zweiten MOSFET-Schalters 50 stellt einen ersten Schalteranschluss 54 der zweiten Schaltereinheit 48 bereit, und ein Source-Anschluss 56 des zweiten MOSFET-Schalters 50 stellt einen zweiten Schalteranschluss 58 der zweiten Schaltereinheit 48 bereit. Der erste Schalteranschluss 54 der zweiten Schaltereinheit 48 ist mit dem zweiten Schalteranschluss 40 der ersten Schaltereinheit 24 und dem ersten Starteranschluss 42 verbunden. Der zweite Schalteranschluss 58 der zweiten Schaltereinheit 48 ist mit dem zweiten Starteranschluss 44 und dem Massepotential 18 verbunden.

Den beiden Schaltereinheiten 24, 48 ist eine Ansteuereinheit 60 zugeordnet. Bei Ausgestaltung der Schaltereinheiten 24, 48 jeweils mit wenigstens einem MOSFET-Schalter 26, 50 ist die Ansteuereinheit 60 dazu ausgebildet, an die MOSFET-Schalter 26, 50 eine Gatespannung anzulegen, um diese leitend zu schalten, also zu schließen und somit einen Stromfluss über diese zu ermöglichen.

Es ist darauf hinzuweisen, dass unter Berücksichtigung der im Startbetriebszustand fließenden vergleichsweise großen Ströme die Schaltereinheiten 24, 48 mehrere zueinander parallel geschaltete MOSFET-Schalter 26 bzw. 50 aufweisen können, so dass über jeden der MOSFET-Schalter 26, 50 ein Teil des gesamt fließenden Stroms geleitet wird.

Dem Starterschalter 32 ist ein allgemein mit 62 bezeichnetes Einrückrelais zugeordnet. Dieses erzeugt bei Anlegen einer elektrischen Spannung an dieses vermittels einer darin vorgesehenen Wicklung eine elektromagnetische Kraft, welche den Starterschalter 32 schließt. Die Spannung wird an das Einrückrelais 62 vermittels eines Steuerschalters 64 angelegt, welcher bei Erzeugung eines Startbefehls geschlossen wird und somit die von der Spannungsquelle 14 am Pluspol derselben bereitgestellte Versorgungsspannung an das Einrückrelais 62 anlegt. Um dabei die zum Schließen des Starterschalters 32 erforderliche elektromagnetische Kraftwirkung erzeugen zu können, ist bei noch geöffnetem Starterschalter 32 ein Stromfluss über das Einrückrelais erforderlich. Um diesen Stromfluss zu ermöglichen, ist eine Kondensatoreinheit 66 vorgesehen, welche im dargestellten Ausgestaltungsbeispiel zwei zueinander parallelgeschaltete Kondensatoren 68, 70 umfasst. Ein erster Kondensatoranschluss 72 der Kondensatoreinheit 66 ist mit dem ersten Schalteranschluss 30 der ersten Schaltereinheit 24 und somit dem zweiten Schalteranschluss 36 des Starterschalters 32 verbunden. Ein zweiter Kondensatoranschluss 74 der Kondensatoreinheit 66 ist mit dem zweiten Schalteranschluss 58 der zweiten Schaltereinheit 48, dem zweiten Starteranschluss 44 des Starters 12 und somit dem Massepotential 14 verbunden. Der zum Schließen des Starterschalters 32 erforderliche elektrische Strom durch eine Wicklung des Starterrelais 62 hindurch führt zum Laden der Kondensatoren 68, 70 der Kondensatoreinheit 66. Ferner erhöht die Kondensatoreinheit 66 die elektromotorische Verträglichkeit (EVM) in dem Startersystem 10.

Bei dem mit Bezug auf die Fig. 1 vorangehend beschriebenen Startersystem 10 bildet die zur ersten Schaltereinheit 24 seriell und zur zweiten Schaltereinheit 48 parallel geschaltete Starterwicklung 46 eine Wandlerinduktivität 76 des Abwärtswandlers 22. Der Starter 12 ist somit mit seiner Starterwicklung 46 in den Abwärtswandler 22 integriert, was zu einem einfach realisierbaren Aufbau führt.

Nachfolgend wird der Betrieb des Startersystems 10 zum Starten einer Brennkraftmaschine beschrieben.

Der Startvorgang beginnt, wenn durch Erzeugung eines Startbefehls der Steuerschalter 64 durch ein diesem zugeordnetes Steuerrelais 78 in seinen Schließzustand gebracht wird und somit auch durch Anlegen der Versorgungsspannung der Spannungsquelle 14 vermittels des Einrückrelais 62 der Starterschalter 32 geschlossen wird. Die durch die Spannungsquelle 14 bereitgestellte Versorgungsspannung liegt in diesem Zustand an dem ersten Schalteranschluss 30 der ersten Schaltereinheit 24 an. Zum Anlegen einer Startbetriebsspannung mit unter der Versorgungsspannung der Spannungsquelle 14 liegendem Spannungsniveau an den Starter 12 werden alternierend bzw. wechselweise die beiden Schaltereinheiten 24, 48 durch entsprechende Ansteuerung vermittels der Ansteuereinheit 60 geschlossen bzw. geöffnet und somit alternierend in einen leitenden Zustand bzw. einen sperrenden Zustand geschaltet. Dabei ist dann, wenn der erste MOSFET-Schalter 26 der ersten Schaltereinheit 24 in seinem leitenden Zustand, also geschlossen ist, der zweite MOSFET-Schalter 50 der zweiten Schaltereinheit 48 geöffnet, also in seinem nicht leitenden Zustand. Das Schließen des ersten MOSFET-Schalters 26 führt zum Anlegen der Versorgungsspannung der Spannungsquelle 14 an den ersten Starteranschluss 42 des Starters 12 und dementsprechend einem ansteigenden Stromfluss durch die auch die Wandlerinduktivität 76 bereitstellende Starterwicklung 46. Der Stromfluss durch die Starterwicklung 46 wird überwacht. Erreicht dieser eine vorbestimmte Startstromschwelle, beispielsweise im Bereich von 300 A, wird der erste MOSFET-Schalter 26 geöffnet, so dass ein weiterer Anstieg des durch die Starterwicklung 46 fließenden elektrischen Stroms verhindert wird. Gleichzeitig bzw. nach dem Öffnen des ersten MOSFET-Schalters 26 wird der zweite MOSFET-Schalter 50 geschlossen, so dass über den zweiten MOSFET-Schalter 50 ein dann abnehmender Stromfluss durch Starterwicklung 46 aufrechterhalten wird. Erreicht oder unterschreitet der durch die Starterwicklung 46 fließende elektrische Strom dann eine untere Stromschwelle, wird der zweite MOSFET-Schalter 50 wieder geöffnet und der erste MOSFET-Schalter 26 geschlossen, so dass durch erneutes Anlegen der Versorgungsspannung der Spannungsquelle 14 an die Starterwicklung 46 der durch diese fließende elektrische Strom wieder ansteigt.

Durch alternierendes und wechselweises Öffnen und Schließen der MOSFET-Schalter 26, 50 der beiden Schaltereinheiten 24, 48 wird es somit möglich, den durch die Starterwicklung 46 fließenden elektrischen Strom derart zu regulieren, dass dieser in einem für den durchzuführenden Startvorgang geeigneten Bereich liegt. Dabei stellt sich durch das alternierende und wechselweise Öffnen und Schließen der beiden Schaltereinheiten 24, 48 eine am ersten Starteranschluss 42 anliegende mittlere Spannung ein, welche unter der von der Spannungsquelle 14 bereitgestellten Versorgungsspannung liegt. Somit wird eine dynamische Anpassung des Lastwiderstands des Starters 12 an den Innenwiderstand der Spannungsquelle 14 erreicht und somit ein hoher Wirkungsgrad des Startersystems 10 gewährleistet. Gleichzeitig wird ein übermäßig hoher Stromfluss durch die Starterwicklung 46 vermieden, so dass auch eine Überlastung der Spannungsquelle 14 durch den aufgrund des inneren Widerstandes derselben darin auftretenden Spannungsabfall verhindert wird. Dies trägt zu einer signifikanten Erhöhung der Lebensdauer der Spannungsquelle 14 und insbesondere auch des Starters 12 bei.

Da mit dem erfindungsgemäß aufgebauten Startersystem 10 die im Startbetrieb auftretende Belastung der Spannungsquelle 14 vergleichsweise nieder gehalten werden kann, ist es möglich, die Spannungsquelle 14 kleiner zu dimensionieren, was aus Kostengründen und aufgrund des geringeren Gewichts von besonderem Vorteil ist. Ferner vermeidet die im Startbetriebszustand durchgeführte Regelung des durch die Starterwicklung 46 fließenden elektrischen Stroms einen Spannungseinbruch in einem Bordspannungssystem, insbesondere in einem Start-Stopp-Betrieb einer Brennkraftmaschine. Die somit bereitgestellte erhöhte Spannungs-Sicherheit führt zu einer ASIL-Fähigkeit des Startersystems 10, so dass dieses beispielsweise auch in Hybridfahrzeugen eingesetzt werden kann, um einen Übergang von einem elektromotorischen Betrieb zu einem Verbrennungsbetrieb durchführen zu können.

Bei dem erfindungsgemäß aufgebauten Startersystem 10 kann der Abwärtswandler 22 sehr nahe am Starter 12 bzw. am Einrückrelais 62 verbaut werden, was zu einer hohen elektromotorischen Verträglichkeit beiträgt. Da der Abwärtswandler 22 an dem zweiten Schalteranschluss 36 des Starterschalters 32 und somit nach dem Einrückrelais 62 angeschlossen ist, kann ein kostspieliger Revers-Battery-Schutz entfallen und es wird eine erhöhte Sicherheit gegen einen Kurzschluss erreicht, da neben den beiden Schaltereinheiten 24, 48 der Starterschalter 32 bzw. das Einrückrelais 62 bzw. den Starterschalter 312 einen weiteren Abschaltpfad bildet. Da weiterhin der Abwärtswandler 42 nach dem Einrückrelais 62 bzw. dem Starterschalter 32 geschaltet ist, bleibt im Startbetrieb die Hauptstromspule bzw. Hauptwicklung des Starterrelais 62 neutral.

Es ist weiter darauf hinzuweisen, dass bei dem vorangehend beschriebenen Aufbau des Startersystems im Startbetrieb selbstverständlich eine Anpassung an die allmähliche Erhöhung der Drehzahl einer zu startenden Brennkraftmaschine erfolgen kann. So kann beispielsweise die Stromregelung bzw. die Starkstromschwelle derart verändert werden, dass mit zunehmender Drehzahl der Brennkraftmaschine und damit auch zunehmender Drehzahl des Starters gewährleistet ist, dass zu jedem Zeitpunkt durch den Starter 12 ein zur weiteren Beschleunigung der Brennkraftmaschine geeignetes Drehmoment bereitgestellt wird. Insbesondere kann aufgrund der mit zunehmender Drehzahl des Starters 12 auch zunehmenden GegenInduktion in der Starterwicklung 46 die am ersten Starteranschluss 42 anliegende mittlere Spannung ansteigen, um einen geeigneten Stromfluss durch die Starterwicklung 46 hindurch zu gewährleisten, ohne dass dabei die Gefahr einer Überlastung der Spannungsquelle 14 besteht.

## Patentansprüche

1. Startersystem für eine Brennkraftmaschine in einem Fahrzeug, umfassend:
- einen Starter (12),
- eine Spannungsquelle (14) zum Versorgen des Starters (12) mit elektrischer Energie in einem Startbetriebszustand,
- einen Abwärtswandler (22) zum Bereitstellen einer Startbetriebsspannung für den Starter (12) im Startbetriebszustand durch Abwärtswandeln einer durch die Spannungsquelle (14) bereitgestellten Versorgungsspannung,
wobei der Abwärtswandler (22) eine Wandlerinduktivität (76) sowie eine erste Schaltereinheit (24) umfasst, wobei ein erster Schalteranschluss (30) der ersten Schaltereinheit (24) mit der Spannungsquelle (14) zu verbinden ist und ein zweiter Schalteranschluss (40) der ersten Schaltereinheit (24) mit einem ersten Starteranschluss (42) des Starters (12) verbunden ist, wobei die Wandlerinduktivität (76) eine Starterwicklung (46) des Starters (12) umfasst, wobei der erste Schalteranschluss (30) der ersten Schaltereinheit (24) über einen Starterschalter (32) mit der Spannungsquelle (14) zu verbinden ist, wobei ein erster Schalteranschluss (34) des Starterschalters (32) mit der Spannungsquelle (14) verbunden ist und ein zweiter Schalteranschluss (36) des Starterschalters (32) mit dem ersten Schalteranschluss (30) der ersten Schaltereinheit (24) verbunden ist,
**dadurch gekennzeichnet,**
- **dass** eine Kondensatoreinheit (66) vorgesehen ist, wobei ein erster Kondensatoranschluss (72) der Kondensatoreinheit (66) mit dem ersten Schalteranschluss (30) der ersten Schaltereinheit (24) und dem zweiten Schalteranschluss (36) des Starterschalters (32) verbunden ist und ein zweiter Kondensatoranschluss (74) der Kondensatoreinheit (66) mit einem zweiten Starteranschluss (44) des Starters (12) oder/und einem Massepotenzial (18) verbunden ist,
- **dass** dem Starterschalter (32) ein Einrückrelais (62) zugeordnet ist, und
- **dass** ein Steuerschalter (64) dazu ausgebildet ist, bei Erzeugung eines Startbefehls eine an einem Pluspol der Spannungsquelle (14) bereitgestellte Versorgungsspannung zum Erzeugen einer elektromagnetischen Kraft zum Schließen des Starterschalters (32) an das Einrückrelais (62) anzulegen, so dass ein zum Schließen des Starterschalters (32) erforderlicher, durch eine Wicklung des Einrückrelais (62) fließender elektrischer Strom die Kondensatoreinheit (66) lädt.

2. Startersystem nach Anspruch 1, **dadurch gekennzeichnet, dass** der Abwärtswandler (22) eine zweite Schaltereinheit (48) umfasst, wobei ein erster Schalteranschluss (54) der zweiten Schaltereinheit (48) mit dem zweiten Schalteranschluss (40) der ersten Schaltereinheit (24) und dem ersten Starteranschluss (42) des Starters (12) verbunden ist und ein zweiter Schalteranschluss (50) der zweiten Schaltereinheit (48) mit einem zweiten Starteranschluss (44) des Starters (12) verbunden ist.

3. Startersystem nach Anspruch 2, **dadurch gekennzeichnet, dass** der erste Schalteranschluss (30) der ersten Schaltereinheit (24) mit einem Pluspol (20) der Spannungsquelle (14) zu verbinden ist, und dass der zweite Schalteranschluss (58) der zweiten Schaltereinheit (48) und der zweite Starteranschluss (44) des Starters (12) mit einem Massepotenzial (18) verbunden sind.

4. Startersystem nach Anspruch 2 oder 3, **dadurch gekennzeichnet, dass** die erste Schaltereinheit (24) wenigstens einen ersten MOSFET-Schalter (26) umfasst, wobei ein Drain-Anschluss (28) des wenigstens einen ersten MOSFET-Schalters (26) den ersten Schalteranschluss (30) der ersten Schaltereinheit (24) bereitstellt und ein Source-Anschluss (38) des wenigstens einen ersten MOSFET-Schalters (26) den zweiten Schalteranschluss (40) der ersten Schaltereinheit (24) bereitstellt, oder/und dass die zweite Schaltereinheit (48) wenigstens einen zweiten MOSFET-Schalter (50) umfasst, wobei ein Drain-Anschluss (52) des wenigstens einen zweiten MOSFET-Schalters (50) den ersten Schalteranschluss (54) der zweiten Schaltereinheit (48) bereitstellt und ein Source-Anschluss (56) des wenigstens einen zweiten MOSFET-Schalters (50) den zweiten Schalteranschluss (58) der zweiten Schaltereinheit (48) bereitstellt.

5. Startersystem nach einem der Ansprüche 2-4, **dadurch gekennzeichnet, dass** eine Ansteuereinheit (60) vorgesehen ist zum wahlweisen Öffnen und Schließen der ersten Schaltereinheit (24) und der zweiten Schaltereinheit (48) im Startbetriebszustand derart, dass im Wesentlichen nur dann, wenn die erste Schaltereinheit (24) geöffnet ist, die zweite Schaltereinheit (48) geschlossen ist, und im Wesentlichen nur dann, wenn die zweite Schaltereinheit (48) geöffnet ist, die erste Schaltereinheit (24) geschlossen ist.

6. Verfahren zum Betreiben eines Startersystems (10) nach einem der vorangehenden Ansprüche zum Starten einer Brennkraftmaschine, wobei nach Erzeugen eines Startbefehls der Abwärtswandler (22) derart betrieben wird, dass eine an den Starter (12) angelegte Startbetriebsspannung kleiner ist als eine durch die Spannungsquelle (14) bereitgestellte Versorgungsspannung oder/und dass ein durch eine Starterwicklung (46) des Starters (12) fließender Starterstrom eine vorbestimmte Startstromschwelle nicht übersteigt.

## Claims

1. Starter system for an internal combustion engine in a vehicle, comprising:
- a starter (12),
- a voltage source (14) to supply the starter (12) with electrical energy in a start operating state,
- a down converter (22) to provide a start operating voltage for the starter (12) in the start operating state by down-converting a supply voltage provided by the voltage source (14),
wherein the down converter (22) comprises a converter inductivity (76) as well as a first switch unit (24), wherein a first switch terminal (30) of the first switch unit (24) is to be connected to the voltage source (14) and a second switch terminal (40) of the first switch unit (24) is connected to a first starter terminal (42) of the starter (12), wherein the converter inductivity (76) comprises a starter winding (46) of the starter (12),
wherein the first switch terminal (30) of the first switch unit (24) is to be connected to the voltage source (14) via a starter switch (32),
wherein a first switch terminal (34) of the starter switch (32) is connected to the voltage source (14) and a second switch terminal (36) of the starter switch (32) is connected to the first switch terminal (30) of the first switch unit (24), **characterized in that**
- a capacitor unit (66) is provided, wherein a first capacitor terminal (72) of the capacitor unit (66) is connected to the first switch terminal (30) of the first switch unit (24) and to the second switch terminal (36) of the starter switch (32) and a second capacitor terminal (74) of the capacitor unit (66) is connected to a second starter terminal (44) of the starter (12) or/and to a ground potential (18),
- an engagement relais (62) is assigned to the starter switch (32), and
- a control switch (64) is adapted to apply a supply voltage provided at a positive pole of the voltage source (14) upon the generation of a start command to the engagement relais (62) for generating an electromagnetic force for closing the starter switch (32) so that an electric current required for closing the starter switch (32) and flowing through a coil of the engagement relais (62) charges the capacitor unit (66).

2. Starter system in accordance with claim 1, **characterized in that** the down converter (22) comprises a second switch unit (48), wherein a first switch terminal (54) of the second switch unit (48) is connected to the second switch terminal (40) of the first switch unit (24) and to the first starter terminal (42) of the starter (12), and a second switch terminal (50) of the second switch unit (48) is connected to a second starter terminal (44) of the starter (12).

3. Starter system in accordance with claim 2, **characterized in that** the first switch terminal (30) of the first switch unit (24) is to be connected to a positive pole (20) of the voltage source (14), and that the second switch terminal (58) of the second switch unit (48) and the second starter terminal (44) of the starter (12) are connected to a ground potential (18).

4. Starter system in accordance with claim 2 or 3, **characterized in that** the first switch unit (24) comprises at least one first MOSFET switch (26), wherein a drain terminal (28) of the at least one first MOSFET switch (26) provides the first switch terminal (30) of the first switch unit (24) and a source terminal (38) of the at least one first MOSFET switch (26) provides the second switch terminal (40) of the first switch unit (24), or/and that the second switch unit (48) comprises at least one second MOSFET switch (50), wherein a drain terminal (52) of the at least one second MOSFET switch (50) provides the first switch terminal (54) of the second switch unit (48) and a source terminal (56) of the at least one second MOSFET switch (50) provides the second switch terminal (58) of the second switch unit (48).

5. Starter system in accordance with one of the claims 2-4, **characterized in that** an actuating unit (60) is provided for the selective opening and closing of the first switch unit (24) and of the second switch unit (48) in the start operating state such that the second switch unit (48) is closed essentially only if the first switch unit (24) is open, and the first switch unit (24) is closed essentially only if the second switch unit (48) is open.

6. Process for operating a starter system (10) in accordance with one of the above claims for starting an internal combustion engine, wherein after generating a start command, the down converter (22) is operated such that a start operating voltage applied to the starter (12) is lower than a supply voltage provided by the voltage source (14), or/and that a starter current flowing through a starter winding (46) of the starter (12) does not exceed a predefined start current threshold.

## Revendications

1. Système de démarreur pour un moteur à combustion interne dans un véhicule, comprenant :
- un démarreur (12),
- une source de tension (14) pour alimenter le démarreur (12) en énergie électrique dans un état de fonctionnement de démarrage,
- un convertisseur abaisseur (22) pour fournir une tension de fonctionnement de démarreur au démarreur (12) dans l'état de fonctionnement de démarrage en abaissant une tension d'alimentation fournie par la source de tension (14),
dans lequel le convertisseur abaisseur (22) comprend une inductance de conversion (76) ainsi qu'une première unité de commutateur (24), dans lequel une première borne de commutateur (30) de la première unité de commutateur (24) doit être connectée à la source de tension (14) et une deuxième borne de commutateur (40) de la première unité de commutateur (24) est connectée à une première borne de démarreur (42) du démarreur (12), dans lequel l'inductance de conversion (76) comprend un enroulement de démarreur (46) du démarreur (12),
dans lequel la première borne de commutateur (30) de la première unité de commutateur (24) doit être connectée à la source de tension (14) via un commutateur de démarreur (32),
dans lequel une première borne de commutateur (34) du commutateur de démarreur (32) est reliée à la source de tension (14) et une deuxième borne de commutateur (36) du commutateur de démarreur (32) est reliée à la première borne de commutateur (30) de la première unité de commutateur (24),
**caractérisé en ce que**
- une unité de condensateur (66) est prévue, dans lequel une première borne de condensateur (72) de l'unité de condensateur (66) est connectée à la première borne de commutateur (30) de la première unité de commutateur (24) et à la deuxième borne de commutateur (36) du commutateur de démarreur (32) et une deuxième borne de condensateur (74) de l'unité de condensateur (66) est connectée à une deuxième borne de démarreur (44) du démarreur (12) ou/et à une masse potentiel (18),
- un relais d'enclenchement (62) est associé au commutateur de démarreur (32), et
- un commutateur de commande (64) est adapté pour appliquer une tension d'alimentation fournie à un pôle positif de la source de tension (14) en das de la génération d'une commande de démarreur au relais d'engagement (62) afin de générer une force électromagnétique pour fermer le commutateur de démarreur (32) de telle sorte qu'un courant électrique nécessaire pour fermer le commutateur de démarreur (32) et circulant à travers une bobine du relais d'engagement (62) charge l'unité de condensateur (66).

2. Système de démarreur selon la revendication 1, **caractérisé en ce que** le convertisseur abaisseur (22) comprend une deuxième unité de commutateur (48), dans lequel une première borne de commutateur (54) de la deuxième unité de commutateur (48) est connectée à la deuxième borne de commutateur (40) de la première unité de commutateur (24) et à la première borne de démarreur (42) du démarreur (12), et une deuxième borne de commutateur (50) de la deuxième unité de commutateur (48) est connectée à une deuxième borne de démarreur (44) du démarreur (12).

3. Système de démarreur selon la revendication 2, **caractérisé en ce que** la première borne de commutateur (30) de la première unité de commutateur (24) doit être connectée à un pôle positif (20) de la source de tension (14), et **en ce que** la deuxième borne de commutateur (58) de la deuxième unité de commutateur (48) et la deuxième borne de démarreur (44) du démarreur (12) sont connectées à un potentiel de masse (18).

4. Système de démarreur selon la revendication 2 ou 3, **caractérisé en ce que** la première unité de commutateur (24) comprend au moins un premier commutateur MOSFET (26), dans lequel une borne de drain (28) dudit au moins un premier commutateur MOSFET (26) fournit la première borne de commutateur (30) de la première unité de commutateur (24) et une borne de source (38) dudit au moins un premier commutateur MOSFET (26) fournit la deuxième borne de commutateur (40) de la première unité de commutateur (24), ou/et que la deuxième unité de commutateur (48) comprend au moins un deuxième commutateur MOSFET (50), dans lequel une borne de drain (52) dudit au moins un deuxième commutateur MOSFET (50) fournit la première borne de commutateur (54) de la deuxième unité de commutateur (48) et une borne de source (56) dudit au moins un deuxième commutateur MOSFET (50) fournit la deuxième borne de commutateur (58) de la deuxième unité de commutateur (48).

5. Système de démarreur selon l'une des revendications 2 à 4, **caractérisé en ce qu'**une unité d'actionnement (60) est prévue pour l'ouverture et la fermeture sélectives de la première unité de commutateur (24) et de la deuxième unité de commutateur (48) dans l'état de fonctionnement de démarreur, de telle sorte que la deuxième unité de commutateur (48) est fermée essentiellement uniquement lorsque la première unité de commutateur (24) est ouverte, et que la première unité de commutateur (24) est fermée essentiellement uniquement lorsque la deuxième unité de commutateur (48) est ouverte.

6. Procédé pour faire fonctionner un système de démarreur (10) selon l'une des revendications précédentes pour démarrer un moteur à combustion interne, dans lequel, après avoir généré une commande de démarreur, le convertisseur abaisseur (22) est actionné de telle sorte qu'une tension de fonctionnement de démarreur appliquée au démarreur (12) est inférieure à une tension d'alimentation fournie par la source de tension (14), et/ou qu'un courant de démarreur circulant à travers un enroulement de démarreur (46) du démarreur (12) ne dépasse pas un seuil de courant de démarreur prédéfini.
